## Europäisches Patentamt
## European Patent Office
## Office européen des brevets

(19)

(11) Numéro de publication : **0 136 234**
**B1**

(12)

# FASCICULE DE BREVET EUROPÉEN

(45) Date de publication du fascicule du brevet :
**06.05.87**

(51) Int. Cl.⁴ : **B 62 D   5/06**, B 62 D   3/12

(21) Numéro de dépôt : **84401851.5**

(22) Date de dépôt : **19.09.84**

(54) **Mécanisme de direction assistée à pignon et crémaillère.**

(30) Priorité : **21.09.83 ES 525776**

(43) Date de publication de la demande :
**03.04.85 Bulletin 85/14**

(45) Mention de la délivrance du brevet :
**06.05.87 Bulletin 87/19**

(84) Etats contractants désignés :
**DE FR GB IT**

(56) Documents cités :
**WO-A-81 /002 39**
**FR-A- 1 274 434**
**FR-A- 2 204 168**
**FR-A- 2 209 899**
**FR-A- 2 264 700**
**US-A- 3 347 109**
**US-A- 4 141 432**

(73) Titulaire : **BENDIX ESPANA S.A.**
**Balmes 243**
**Barcelona 6 (ES)**

(72) Inventeur : **Estela Rosell, Jorge**
**c/Escornalbou 23 1 la**
**Barcelona 26 (ES)**

(74) Mandataire : **Le Moenner, Gabriel et al**
**SERVICE BREVETS BENDIX 44, Rue François 1er**
**F-75008 Paris (FR)**

EP 0 136 234 B1

Jouve, 18, rue St-Denis, 75001 Paris, France

## Description

La présente invention concerne les mécanismes de direction assistée pour véhicule automobile, et plus particulièrement les mécanismes de direction assistée à pignon et crémaillère du type comprenant un boîtier de direction fixe dans lequel est agencé un ensemble coopérant pignon/crémaillère ; un ensemble coopérant piston/cylindre à double effet associé à la crémaillère, d'un côté du boîtier, et comportant des chambres de pressions antagonistes de part et d'autre du piston ; des moyens pour alimenter sélectivement en fluide sous pression l'une ou l'autre des chambres antagonistes de l'ensemble piston/cylindre à double effet pour assister le déplacement de la crémaillère ; le piston étant solidaire d'une tige creuse fixe fixée par une première de ses extrémités au boîtier ; le cylindre étant solidaire d'une première extrémité de la crémaillère en s'étendant dans le prolongement de celle-ci ; et une paire de moyens de liaison de l'ensemble crémaillère et cylindre à une timonerie de roues orientables d'un véhicule, un premier des moyens de liaison étant associé à l'extrémité du cylindre opposée à la crémaillère.

Un mécanisme de direction assistée de ce type est décrit dans le document FR-A-1 274 434. Dans le mécanisme de ce document, le boîtier fixe, présentant une configuration ouverte, est fixé sur un premier rail latéral du châssis du véhicule et le cylindre est monté à coulissement étanche par ses deux extrémités sur la tige fixe montée entre le boîtier fixe et un second rail latéral du châssis, dans un agencement présentant une extension transversale importante pouvant induire des problèmes de désalignement des composants et offrant de nombreuses zones de coulissement non protégées ou difficilement protégeables.

La présente invention a pour objet de proposer un mécanisme de direction assistée du type susmentionné, de construction simplifiée et robuste, de configuration particulièrement compacte et permettant une protection simple et efficace des surfaces de coulissement.

Pour ce faire, selon l'invention, le piston est monté sur l'autre extrémité de la tige creuse qui s'étend coaxialement dans une partie tubulaire du boîtier dans laquelle est guidé à coulissement le cylindre, le premier des moyens de liaison étant monté sur une extrémité fermée formant fond du cylindre, le second des moyens de liaison étant monté sur l'extrémité de la crémaillère opposée au piston.

Selon un mode de réalisation particulier de l'invention, le cylindre coopère à coulissement avec une extrémité de la partie tubulaire du boîtier, le piston étant disposé sensiblement à l'aplomb de ladite extrémité de la partie tubulaire du boîtier.

D'autres caractéristiques et avantages de la présente invention ressortiront de la description suivante d'un mode de réalisation, donné à titre illustratif mais nullement limitatif, faite en relation avec les dessins annexés, sur lesquels :

la figure 1 est une vue en coupe longitudinale d'un mécanisme de direction assistée selon l'invention ;

la figure 2 est une vue en coupe transversale suivant le plan de coupe II-II de la figure 1 ;

la figure 3 est une vue schématique en coupe transversale suivant le plan de coupe III-III de la figure 1 ; et

les figures 4 à 6 sont des vues analogues aux figures 1 à 3 représentant un autre mode de réalisation du mécanisme selon l'invention.

Dans la description qui va suivre et sur les dessins, les éléments identiques ou analogues portent les mêmes chiffres de référence, éventuellement affectés d'un digit distinctif supplémentaire.

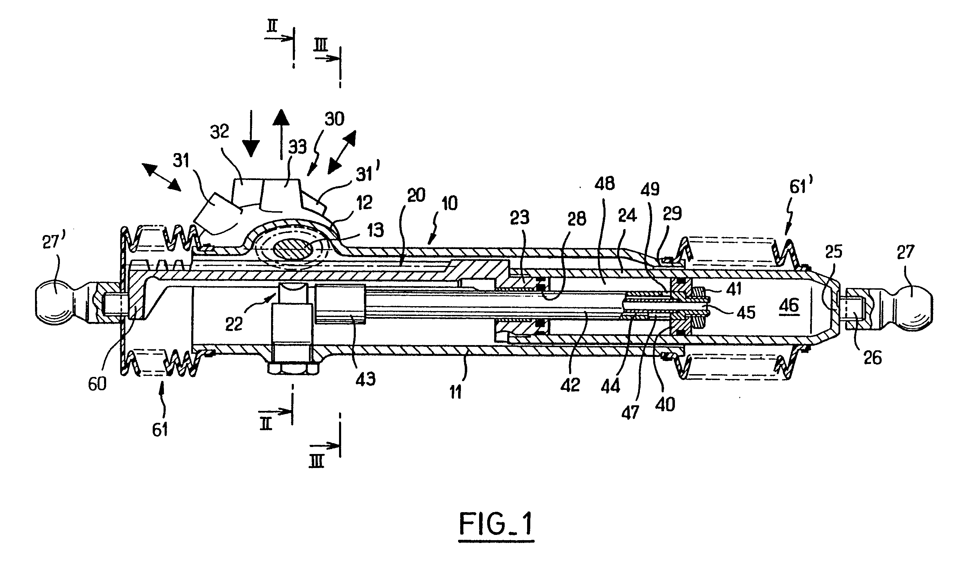

Dans le mode de réalisation représenté sur les figures 1 à 3, le mécanisme de direction assisté selon l'invention comprend de façon générale un boîtier de direction 10 de forme générale oblongue, réalisé avantageusement en fonderie et comportant une partie d'extrémité sensiblement tubulaire 11 et une partie centrale 12 dans laquelle est monté tourillonnant un pignon 13 engrenant avec une structure de crémaillère 20 et sur laquelle est rapporté un corps 14 d'une valve de distribution rotative 30 coaxiale au pignon 13 et actionnée en séquence avec le pignon 13, par un organe d'entrée 15 destiné à être couplé à une colonne de direction de véhicule.

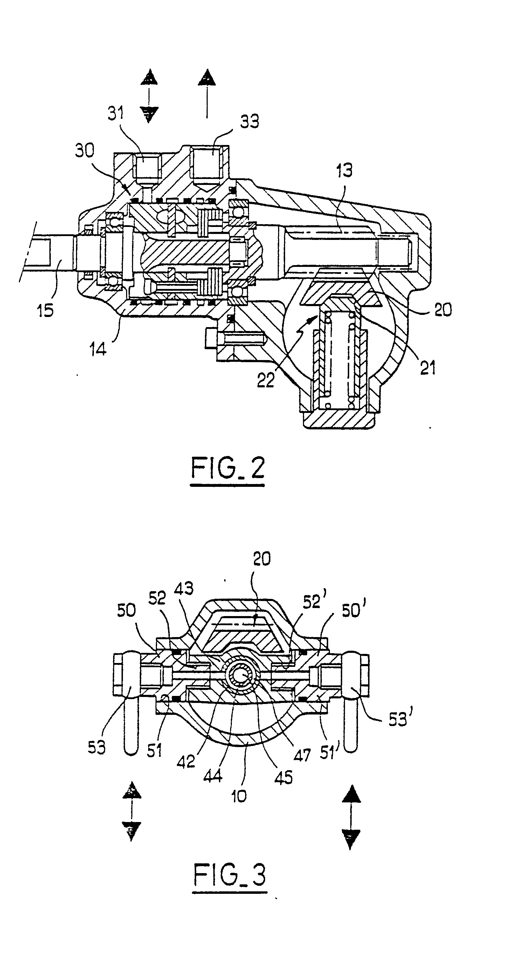

La structure de crémaillère 20 présente une configuration générale trapézoïdale, particulièrement visible sur les figures 2 et 3, avec la denture formée sur le petit côté du trapèze, le grand côté du trapèze comportant un évidement longitudinal également trapézoïdal 21 coopérant avec le poussoir d'un organe d'appui élastique 22 monté dans le corps 12 du boîtier 10 et maintenant les dentures de la crémaillère en engrènement avec les dents du pignon 13 tout en assurant le guidage à coulissement longitudinal de la crémaillère 20 dans le boîtier 10.

La structure de crémaillère 20 comporte à une première extrémité un prolongement tubulaire 23 décalé axialement par rapport au corps trapézoïdale de crémaillère de façon à s'étendre sensiblement coaxialement à la partie tubulaire 11 du boîtier de direction 10. Sur la périphérie du prolongement tubulaire 23 est montée, par exemple vissée, l'extrémité ouverte d'une structure de cylindre 24 dont l'extrémité opposée formant fond 25 comporte des moyens de connexion tels que 26 à une rotule d'articulation 27 destinée à être reliée à l'embiellage d'une roue directive du véhicule. Dans le cylindre 24 est disposé un piston 40 solidarisé, par exemple par un écrou 41, à une extrémité d'une tige creuse de piston 42 s'étendant à coulissement étanche au travers de l'alésage du prolongement tubulaire 23 de la structure de crémaillère 20 pourvu à cet effet d'un joint coulissant 28. Le cylindre 24 est par ailleurs guidé par rapport au prolongement tubulaire 11 du boîtier 10 par un palier coulissant 29 formé à l'extrémité de ce prolongement tubulaire 11 du boîtier 10, le piston 40 étant disposé sensiblement à l'aplomb de cette portée de coulissement 29.

L'extrémité de la tige creuse 42 opposée au piston 40 est montée dans un bloc central de distribution 43 solidarisé au corps de boîtier 10 comme on le verra par la suite. Dans la tige creuse 42 s'étend un tube central 44 débouchant du côté du piston 40 opposé à la tige creuse 42 et définissant ainsi un canal 45 d'alimentation de la chambre de vérin 46 située entre le piston 40 et le fond 25 du cylindre 24 et, à l'intérieur de la tige creuse 42, un canal annulaire 47 communiquant avec l'autre chambre annulaire 48 du cylindre 24 définie entre le piston 40 et le prolongement tubulaire 23 de la crémaillère 20 par un orifice 49 formé dans la paroi de la tige creuse 42, au voisinage du piston 40.

Comme on le voit sur la figure 3 le bloc 43 présente une configuration parallélépipédique avec un alésage borgne central dans lequel est emmanchée la tige creuse 42, le bloc 43 étant maintenu en place dans le boîtier 10 par une paire d'embouts 50, 50' comportant un corps cylindrique reçu dans des alésages en vis-à-vis 51, 51' du corps de boîtier 10 et des extrémités filetées reçues dans des taraudages en opposition 52, 52' formés dans les parois latérales opposées du bloc 43. Le passage intérieur de l'embout 50 communique avec le canal annulaire 47 par un passage formé dans le bloc 43, et le passage intérieur de l'embout 50' communique avec le canal central 45 par un passage également formé dans le bloc 43, décalé longitudinalement du précédent. Les embouts 50 et 50' servent au montage de raccords 53, 53' de tubulures de connexion aux ouvertures de distribution respectives 31, 31' de la valve de distribution 30 pourvue par ailleurs, classiquement, d'une ouverture d'entrée 32 destinée à être reliée à une source de pression et d'une ouverture de retour 33 destinée à être reliée à une bâche. L'extrémité du corps de crémaillère 20 opposée au piston 40 comporte une aile transversale 60 portant une rotule 27 de connexion à une biellette de timonerie de roue du véhicule. Lorsque l'organe d'entrée 15 est actionné dans un sens ou dans l'autre, et, avec lui, la valve 30 et le pignon 13, le déplacement de la crémaillère 20 sous l'effet de la rotation du pignon 13 est assisté par la pression sélectivement adressée par la valve 30 dans la chambre correspondante 48 ou 46 de l'ensemble piston stationnaire 40/cylindre mobile 24. Comme on le voit sur la figure 1, un soufflet de protection est avantageusement prévu entre la rotule 27' et l'extrémité adjacente du corps de boîtier 10, un soufflet de protection similaire 61' étant prévu entre l'extrémité opposée du boîtier 11 et le cylindre 24. Comme représenté sur la figure 2, la valve de distribution rotative 30 est avantageusement du type à rotor en étoile et à ressorts en C tel que décrit dans la demande de brevet européen EU 0 077 710 au nom de la demanderesse.

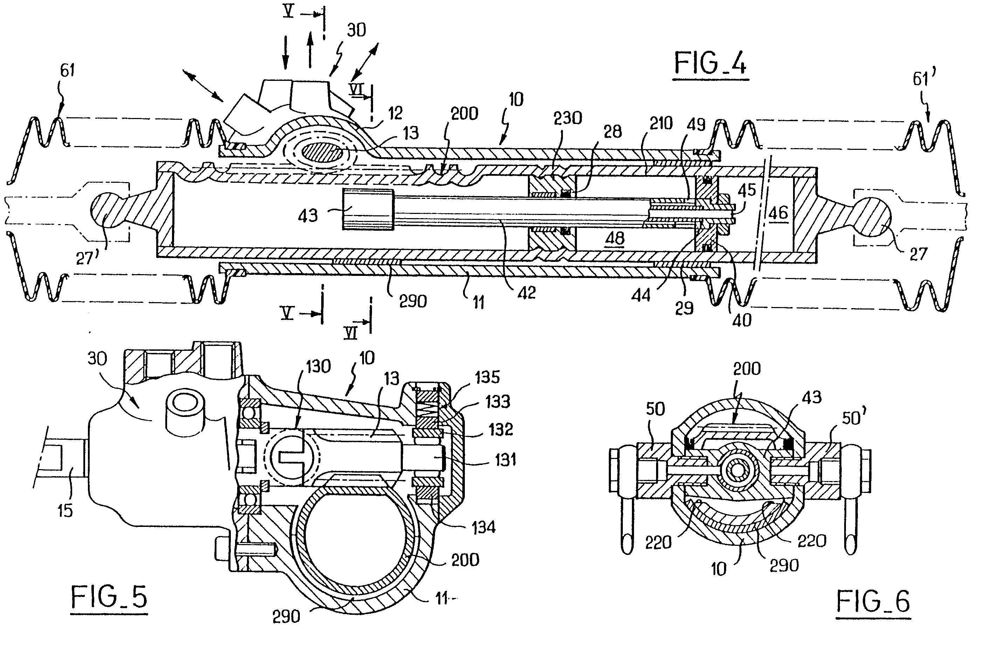

Le mode de réalisation représenté sur les figures 4 à 6 se distingue essentiellement du précédent en ce que la structure de crémaillère 200 est ici constituée à partir d'un tube matricé localement pour constituer la denture de crémaillère, le cylindre mobile coopérant avec le piston stationnaire 40 étant constitué par une extrémité 210 du tube de crémaillère, les extrémités du tube étant fermées, notamment pour délimiter la chambre de vérin 46, par des parois de fond discoïdales 270 solidaires des rotules d'articulation 27 et 27'.

Dans ce mode de réalisation, la tige creuse 42 coopère à coulissement avec une cloison annulaire 230 fixée à l'intérieur du tube 210 et pourvue, comme le prolongement tubulaire 23 du mode de réalisation précédent, de joints coulissants 28. Le tube 210 coulisse dans le prolongement tubulaire 11 du boîtier 10 au moyen d'une portée de coulissement 29 au niveau du piston 40, comme précédemment, et d'une seconde portée de coulissement 290 montée dans le boîtier 10 à l'aplomb du bloc central de distribution et de montage 43. Le tube de crémaillère 200 comporte des ouvertures longitudinales opposées 220 au travers desquelles passent les zones latérales du bloc 43 servant au raccordement avec les embouts 50, 50'. Pour s'affranchir des irrégularités éventuelles de la denture de la crémaillère 200, le pignon 13 est relié à l'organe d'entrée 15 par un joint universel 130 et son axe 131 est monté à tourillonnement dans une bague de roulement 132 solidaire d'une bague externe 133 montée de façon à pouvoir se déplacer latéralement radialement dans un logement sensiblement annulaire 134 du boîtier 10 en étant sollicitée élastiquement en engagement avec la denture de la crémaillère 200 par un ressort 135.

Quoique la présente invention ait été décrite en relation avec des modes de réalisation particuliers, elle ne s'en trouve pas limitée mais est au contraire susceptible de modifications et de variantes qui apparaîtront à l'homme de l'art.

**Revendications**

1. Mécanisme de direction assistée comprenant : un boîtier de direction fixe (10) dans lequel est agencé un ensemble coopérant pignon (13)/crémaillère (20, 200) ; un ensemble coopérant piston (40)/cylindre (24) à double effet associé à la crémaillère (20, 200), d'un côté du boîtier (10, 11), et comportant des chambres de pressions antagonistes (46, 48) de part et d'autre du piston (40) ; des moyens (30) pour alimenter sélectivement en fluide sous pression l'une ou l'autre des chambres antagonistes de l'ensemble piston/cylindre à double effet pour assister le déplacement de la crémaillère ; le piston (40) étant solidaire d'une tige creuse fixe (42) fixée par une première de ses extrémités au boîtier (10, 11) ; le cylindre (24, 210) étant solidaire d'une première extrémité (23) de la crémaillère (20, 200) en s'étendant dans le prolongement de celle-ci ; et une paire de moyens de liaison (27, 27') de l'ensemble crémaillère (20,

200) et cylindre (24, 210) à une timonerie de roues orientables d'un véhicule, un premier (27) des moyens de liaison étant associé à l'extrémité du cylindre opposée à la crémaillère, caractérisé en ce que le piston (40) est monté sur l'autre extrémité de la tige creuse (42) qui s'étend coaxialement dans une partie tubulaire (11) du boîtier (10) dans laquelle est guidé à coulissement (29) le cylindre (24, 210), le premier (27) des moyens de liaison (27, 27') étant monté sur une extrémité fermée formant fond (25) du cylindre, le second (27') des moyens de liaison étant monté sur l'extrémité de la crémaillère (20, 200) opposée au piston.

2. Mécanisme selon la revendication 1, caractérisé en ce que le cylindre (24, 210) coopère à coulissement (29) avec une extrémité de la partie tubulaire (11) du boîtier (10), le piston (40) étant disposé sensiblement à l'aplomb de ladite extrémité de la partie tubulaire du boîtier.

3. Mécanisme selon la revendication 1 ou la revendication 2, caractérisé en ce qu'il comprend deux passages de fluide distincts (45, 47) s'étendant dans la tige creuse (42) et débouchant de part et d'autre du piston (40).

4. Mécanisme selon la revendication 3, caractérisé en ce que la première extrémité de la tige creuse fixe (42) est solidarisée à un bloc de montage (43) monté dans le boîtier (10) au moyen d'au moins un élément de montage (50, 50') formant raccord avec lesdits moyens (30) d'alimentation des chambres de l'ensemble piston/cylindre.

5. Mécanisme selon l'une des revendications 1 à 4 caractérisé en ce que la tige creuse (42) traverse à coulissement étanche (28) une cloison annulaire (23, 230) solidaire de la crémaillère (20).

6. Mécanisme selon l'une des revendications 1 à 5, caractérisé en ce que la crémaillère (20) comporte une partie de corps profilée rectiligne coopérant (21) avec un dispositif d'appui élastique (22) monté dans le boîtier et une extrémité en forme d'aile (60) comportant le second (27') des moyens de liaison à la timonerie.

7. Mécanisme selon l'une des revendications 1 à 5, caractérisé en ce que la crémaillère (200) est formée à partir d'un tube, le cylindre (210) étant constitué par un prolongement du tube de crémaillère.

8. Mécanisme selon la revendication 7, caractérisé en ce que le pignon (13) est monté dans le boîtier (10, 11) avec possibilité de débattement à l'encontre d'un organe élastique (135).

## Claims

1. Servo steering mechanism comprising : a fixed steering casing (10) including a cooperating pinion (13)/rack (20, 200) assembly, a double-acting cooperating piston (40)/cylinder (24) assembly associated with the rack (20, 200) at one side of the casing (10, 11) and comprising opposed pressure chambers (46, 48) on either side of the piston (40), means (30) for selectively pressurizing the one or the other of the opposed chambers of the double-acting piston/cylinder assembly for assisting displacement of the rack, the piston (40) being fixed to a stationary hollow rod (42) fixed by a first of its ends to the casing (10, 11), the cylinder (24, 210) being mounted to a first end (23) of the rack (20, 200) by extending into the extension thereof, and a pair of means (27, 27') for connecting the rack (20, 200)-and-cylinder (24, 210) assembly to a steering linkage of steerable wheels of a vehicle, a first (27) of the connecting means being associated to the end of the cylinder opposite the rack, characterized in that the piston (40) is mounted on the other end of the hollow rod (42) which extends coaxially into a tubular portion (11) of the casing (10) wherein the cylinder (24, 210) is slidingly (29) guided, the first (27) of the connecting means (27, 27') being mounted on one closed end forming a bottom (25) of the cylinder, the second (27') of the connecting means being mounted on the end of the rack (20, 200) opposite the piston.

2. Mechanism according to claim 1, characterized in that the cylinder (24, 210) slidingly (29) cooperates with an end of the tubular portion (11) of the casing (10), the piston (40) being disposed substantially at the place of said end of the tubular portion of the casing.

3. Mechanism according to claim 1 or claim 2, characterized in that it comprises two distinct fluid passages (45, 47) extending into the hollow rod (42) and opening on either side of the piston (40).

4. Mechanism according to claim 3, characterized in that the first end of the fixed hollow rod (42) is fixed to a mounting block (43) mounted in the casing (10) by means of at least one mounting element (50, 50') forming a connection with said means (30) for pressurizing the chambers of the piston/cylinder assembly.

5. Mechanism according to any of claims 1 to 4, characterized in that the hollow rod (42) sealingly slidingly (28) traverses an annular wall (23, 230) fixed to the rack (20).

6. Mechanism according to any of claims 1 to 5, characterized in that the rack (20) comprises a lineal profiled portion of the body cooperating (21) with a resilient abutment device (22) mounted in the casing, one end in the form of a vane (60) comprising the second (27') of the means for connection to the steering linkage.

7. Mechanism according to any of claims 1 to 5, characterized in that the rack (200) is formed from a tube, the cylinder (210) being constituted by an extension of the tube of the rack.

8. Mechanism according to claim 7, characterized in that the pinion (13) is mounted in the casing (10, 11) such as to allow for a deflection thereof against the action of a resilient member (135).

## Patentansprüche

1. Hilfslenkeinrichtung mit einem festgelegten Lenkgehäuse (10), in dem angeordnet sind : eine Zahnrad (13)-Zahnstangen (20, 200)-Anordnung ; eine doppeltwirkende Kolben (40)-Zylinder (24)-Anordnung, die auf einer Seite des Gehäuses (10, 11) der Zahnstange (20, 200) zugeordnet ist und entgegengesetzte Druckkammern (46, 48) beidseitig zum Kolben (40) aufweist ; Mittel (30) zur wahlweisen Druckbeaufschlagung der einen oder anderen der entgegengesetzten Kammern der doppeltwirkenden Kolben-Zylinder-Anordnung, um die Verschiebung der Zahnstange zu unterstützen, wobei der Kolben (40) mit einer festgelegten hohlen Stange (42) fest verbunden ist, die durch ein erstes seiner Enden am Gehäuse (10, 11) befestigt ist, wobei der Zylinder (24, 210) mit einem ersten Ende (23) der Zahnstange (20, 200) fest verbunden ist, indem er sich in die Verlängerung derselben erstreckt, und ein Paar Verbindungsmittel (27, 27') zum Verbinden der Zahnstangen (20, 200) und Zylinder (24, 210)-Anordnung mit einem Lenkgestänge für die lenkbaren Räder eines Fahrzeuges, wobei ein erstes (27) der Verbindungsmittel dem der Zahnstange entgegengesetzten Ende des Zylinders zugeordnet ist, dadurch gekennzeichnet, daß der Kolben (40) am anderen Ende der hohlen Stange (42) angebracht ist, die sich koaxial in einen rohrförmigen Abschnitt (11) des Gehäuses (10) erstreckt, in welchem der Zylinder (24, 210) gleitend (29) geführt ist, wobei das erste (27) der Verbindungsmittel (27, 27') an dem den Boden (25) des Zylinders bildenden geschlossenen Ende angebracht ist, während das zweite Verbindungsmittel an dem dem Kolben entgegengesetzten Ende der Zahnstange (20, 200) angebracht ist.

2. Einrichtung nach Anspruch 1, dadurch gekennzeichnet, daß der Zylinder (24, 210) gleitend (29) mit einem Ende des rohrförmigen Abschnittes (11) des Gehäuses (10) zusammenwirkt, wobei sich der Kolben (40) im wesentlichen an der Stelle des besagten Endes des rohrförmigen Abschnittes des Gehäuses befindet.

3. Einrichtung nach Anspruch 1 oder 2, dadurch gekennzeichnet, daß sie zwei getrennte Strömungskanäle (45, 47) aufweist, die sich in die hohle Stange (42) hineinerstrecken und beidseitig zum Kolben (40) münden.

4. Einrichtung nach Anspruch 3, dadurch gekennzeichnet, daß das erste Ende der festgelegten hohlen Stange (42) an einem Montageblock (43) befestigt ist, der im Gehäuse (10) mittels mindestens eines Montageelementes (50, 50') montiert ist, welches einen Anschluß mit den Mitteln (30) zur Druckbeaufschlagung der Kammern der Kolben-Zylinder-Anordnung bildet.

5. Einrichtung nach einem der Ansprüche 1-4, dadurch gekennzeichnet, daß die hohle Stange (42) sich gleitend und abgedichtet (28) durch eine ringförmige Trennwand (23, 230) erstreckt, die mit der Zahnstange (20) fest verbunden ist.

6. Einrichtung nach einem der Ansprüche 1-5, dadurch gekennzeichnet, daß die Zahnstange (20) einen geradlinigen profilierten Abschnitt des Körpers aufweist, der mit einer im Gehäuse angebrachten elastischen Anschlagvorrichtung (22) zusammenwirkt (21), wobei ein Ende in Form eines Flügels (60) das zweite Verbindungsmittel (27') aufweist.

7. Einrichtung nach einem der Ansprüche 1-5, dadurch gekennzeichnet, daß die Zahnstange (200) aus einem Rohr hergestellt ist, wobei der Zylinder (210) von einer Verlängerung des Rohres der Zahnstange gebildet wird.

8. Einrichtung nach Anspruch 7, dadurch gekennzeichnet, daß das Zahnrad (13) im Gehäuse (10, 11) mit der Möglichkeit einer Auslenkung entgegen der Wirkung eines elastischen Teiles (135) gelagert ist.

FIG_1

FIG_2

FIG_3

FIG_4

FIG_5

FIG_6